# EUROPEAN PATENT APPLICATION

(11) **EP 3 299 436 A1**
(43) Date of publication of application: **28.03.2018**
(21) Application number: 16190645.8
(22) Date of filing: 26.09.2016
(51) Int. Cl.: C09K 8/528

(54) **UNDERGROUND HALITE MITIGATION**

(71) Applicant: Nederlandse Organisatie voor toegepast- natuurwetenschappelijk onderzoek TNO, 2595 DA 's-Gravenhage (NL)
(72) Inventor: ROELANDS, Cornelis Petrus Marcus, 2595 DA 's-Gravenhage (NL); VELTHUIS, Johannes Franciscus Maria, 2595 DA 's-Gravenhage (NL); LUBELLI, Barbara Antonietta, 2595 DA 's-Gravenhage (NL)
(74) Representative: V.O.

(57) **Abstract**

Disclosed are uses and methods for mitigating halite deposition in gas wells and other underground systems. An embodiment is the use of a composition for mitigating halite deposition in gas wells, wherein the composition comprises ferrimeso-tartrate (Fe-mTa).

## Description

### Background

Embodiments relate to methods and uses of compositions for preventing, limiting, eliminating, and/or mitigating inorganic depositions in gas and oil wells and other subterranean systems.

Mature low-pressure gas wells are liable to the deposition of salts, also known as scaling. In particular halite deposition (of crystalline NaCl) is a serious problem because of clogging of the pores of porous rocks wherein the gas is contained. The halite deposits can block the flow path of hydrocarbons (in particular natural gas, but possibly also oil). Hence, a particular type of "scale" in such gas wells is halite. Halite deposits comprise predominantly NaCl (e.g. less than 10 wt.% other components). Salt deposition is particularly severe in wells with high saline water such as brines. In such wells, water evaporates (e.g. due to the flow of natural gas) causing supersaturation of the brine, resulting in precipitation of NaCl and the formation of scale (in particular halite). Temperature decrease may also contribute to oversaturation and deposition. Halite deposition is often a problem in for example subsea fields, mature onshore wells, and unconventional shale reservoirs.

Halite salt deposition in gas wells is distinct from other types of scale formation (in particular, carbonate and sulfate) primarily because of the high solubility of NaCl and the accordingly higher precipitation masses with small degrees of oversaturation. Most standard scale inhibitors (e.g. for carbonate and sulfate scale) are ineffective against halite scaling, or would require unacceptable high concentrations.

A conventional mitigation strategy for halite deposition in gas wells is flushing with fresh water on a regular basis. However, in some instances, flushing would be necessary on a daily basis (or e.g. each few days). This reduces production time and is hence economically not attractive. A brief summary of the challenge of preventing and mitigating NaCl salt deposition in low-pressure gas wells is given in the press release "Brenntag introduces new salt inhibitor for low-pressure gas wells" available at www.pressreleasefinder.com/pr/BTPR002/en. The press release mentions that a salt inhibitor (T-3000E) is developed to prevent salt deposition. No information about the chemical identity or composition of the salt inhibitor is given. The press release is not a technical document and does not provide an enabling disclosure.

The present invention aims to provide, in an aspect, methods for addressing (e.g. mitigating, preventing, and/or reducing) the problems caused by salt (halite) deposition in underground systems such as gas wells, in particular in low pressure gas wells.

Hexacyanoferrate is mentioned as halite inhibitor in Tore Tjomsland et al., "Halite Deposition - Thermodynamic Oversaturation and Chemical Qualification", Oil Field Chemistry Symposium, Geilo 13-16th March 2016. In this document, some commercial inhibitors were compared with hexacyanoferrate. The document states that "the tests found limited chemical performance" for inhibitors from vendors (the chemical identities of the inhibitors are not given). Use of hexacyanoferrate of as inhibitor is also mentioned in Bellarby, *Well Completion Design* (2009), page 396. Other uses of this compound are as anti-caking agent for particulate NaCl salt.

Anti-caking agents are used as additive for particulate salt, i.e. table salt. This is very different from mitigating halite deposition. Caking refers of the tendency of substantially dry, flowable, particulate salt (crystalline NaCl powder) to form large, agglomerated masses (lumps) upon exposure to moisture or humidity in the atmosphere. This so-called caking is due the formation of salt bridges between NaCl single crystals, in particular by repetitive solution and recrystallization of salt at the peripheral portions of individual salt particles by the formation of moisture layers when exposed to an atmosphere with fluctuating humidity. Anti-caking agents are often added to such particulate and flowable salt to prevent the formation of cakes. Such agents generally disrupt or prevent the formation of salt bridges. Hence, the caking of particulate salt is distinct from halite deposition in gas wells, if only because of the mechanisms and conditions at which these unwanted processes occur.

A consideration for underground halite deposition mitigation is that any compound introduced into subterranean systems, in particular into wells such as gas wells, should desirable not be of environmental or health concern (e.g. should not be toxic). Neither should any degradation product of such compound introduce environmental or health risks. In particular downstream processing of natural gas should be taken into account, in particular glycol dehydration as often used for water removal from natural gas. Raw natural gas from gas wells (hence from an underground reservoir) contains significant amounts of water, such as up to saturation. This water could cause several problems downstream, such as freezing in piping and formation of hydrates. Liquid water may furthermore drop out of the natural gas upon cooling or pressure reduction. The liquid water will often be acidic and could cause corrosion. Hence, water is removed from the gas stream, most commonly by glycol dehydration. Generally a glycol absorber is used, together with a glycol stripper usually with a reboiler. Glycol is thermally regenerated. The reboiler temperature is for example about 200 °C or in the range of 200 to 300 °C. Any gas well scale prevention method needs to be compatible with downstream processing, such as glycol dehydration. Any halite deposition inhibitor used is desirably stable and effective under well conditions, e.g. at 100 °C to 200 °C, more preferably 150 to 200 °C. The well pressure (e.g. in the near wellbore region) is for instance 100 - 200 bar, e.g. about 150 bar.

A background reference is EP 2597126. This document discloses a method of enhancing the adsorption of a salt inhibitor onto a wellbore region, the method comprising preconditioning the wellbore region, emplacing a salt inhibitor into the wellbore region and shutting in the well for a period of time sufficient to initiate adsorption of the salt inhibitor onto the wellbore region. The document mentions that the salt inhibitor preferably comprises a Group 3-15 metal and an anion. Tartrate is mentioned as a possible anion.

A further reference is EP 0976911 describing inhibitors for inhibiting scale formation in a hydrocarbon production system such as an oil field. A further reference is Chen et al. in SPE 121458 (a paper prepared for the 2009 SPE International Symposium on Oilfield Chemistry; Society of Petroleum Engineers) wherein it is mentioned that the inhibition of halite mineral scale formation in oil and gas production is notoriously difficult. The paper mentions that high concentrations of halite inhibitor always provide limited inhibition performance. Yet a further reference is Paper SPE 169803-MS (a paper presented at SPE International Oilfield Scale Conference, 14-15 May 2014) of Ho et al mentioning a carboxylic acid halite scale inhibitor No further information about the chemical composition is given. In SPE 169803-MS four possible mechanisms are described to explain the performance of halite inhibitors: 1) inhibition of nucleation and growth, 2) crystal distortion, 3) dispersive effect (in particular for polymer inhibitors) and 4) film formation.

### Summary

Provided is the use of a composition for mitigating halite deposition in a gas well, wherein the composition comprises ferri-meso-tartrate (Fe-mTa). Also provided is the method of maintaining a hydrocarbon well comprising introducing a composition comprising Fe-mTa into the hydrocarbon well. Also provided is the use of a composition for mitigating halite deposition in a subterranean CO₂ storage site, wherein the composition comprises Fe-mTa. Further aspects and embodiments are also provided.

### Brief description of the drawings

Fig. 1 illustrates crystallization on porous rock and the formation of particular crystal shapes achievable with an inventive embodiment.
Fig. 2 illustrates crystallization from solution and the formation of dendritic crystals achievable with an inventive embodiment.

### Detailed description

The present invention provides, in an aspect, for the use of a composition comprising ferri-meso-tartrate (Fe-mTa) to mitigate halite deposition in hydrocarbon wells, in particular gas wells. More generally, the invention relates to use of compositions comprising Fe-mTa and/or similar compounds to mitigate halite deposition in subterranean systems, such as oil wells, gas wells, and subterranean storage sites in particular for fluids, especially CO₂ storage sites.

Herein, mitigates includes but not restricted to one or more of preventing, inhibiting, reducing, limiting, eliminating and mitigating the effects of halite deposition. The use is preferably for inhibiting clogging by halite deposition.

Halite deposition may occur for example in the near-wellbore region, optionally combined with depositions in other parts of a well. The near-wellbore region comprises porous rocks close to (but not in) the well bore. The near-wellbore region is generally next to the tubing. Water saturation as result of evaporation may occur in the near-wellbore region. Preferred embodiments of the disclosed use and methods addresses halite deposition in the near-wellbore region, while optionally also addressing halite deposition in other well regions and/or scaling by other salts. Salt deposits may also form on well equipment, e.g. production tubing and chokes. The described use may also provide advantages for mitigating halite deposition on well equipment such as tubing.

Fe-mTa is known for use as anti-caking agent for particulate NaCl, in particular in connection with membrane chlorine electrolysis. The substance is commercially available from AkzoNobel. The substance is also used as food additive (anti caking agent in salt) with identification E 534 under Regulation (EU) No 231/2012.

Fe-mTa is used herein to refer also to a complexation product of a meso-tartrate and iron (III). The Fe-mTA may for example be provided as a composition comprising a mixture (such as obtained by mixing) alkali metal tartrates [DL- and *meso*-tartrates] (in particular the sodium tartrates) with an iron(III) salt such as iron(III)chloride. The *meso*-tartrate content is for instance at least 10 wt.% or at least 30 wt.% or at least 50 wt.% or at least or about 65 wt.% of total tartrate content. Fe-mTa comprise for example at least 10 wt.% or at least 28 wt.% meso-tartrate expressed as the anion on dry basis. Fe-mTa may also be identified as the iron(III) complexation product of *meso-* 2,3 dihydroxibutanedioc acid, optionally in a composition also comprising such complexation product for the D(+)- and L(-)-acids. Meso-tartaric acid can also be identified as (2*R*,3*S*)-tartaric acid. Fe-mTA may be identified with CAS number 1280193-05-9.

Further details about illustrative Fe-mTa compositions and a manufacturing process thereof are given in the Scientific Opinion in EFSA Journal 2015; 13(1):3980. The method may optionally comprise a step of preparing a composition (preferably suitable for introduction into a gas well), preferably using a Fe-mTa stock solution (or masterbatch), for instance a solution with a pH 3.5-3.9, and/or e.g. with at least 10 wt.% or at least 20 wt.% or at least 30 wt.% of the iron(III) complexation product. The composition as introduced into a well may optionally further comprise a surfactant (e.g. anionic, cationic, non-ionic and/or zwitter ionic) and optional further additives. The solution could be diluted with water before introduction into the gas well. An aqueous solution as introduced into a wellbore may contain for example at least 1.0 ppm, or at least 10 ppm, or at least 100 ppm (all by weight) or at least 0.10 wt.%, or for example at least 1.0 µM or at least 10 µM or at least 100 µM or at least 1.0 mM of Fe-mTa on the basis of iron(III) complexation product, preferably on the basis of the meso-form, for example 5 to 500 or 10 to 200 ppm by weight. The solution is for instance prepared from meso-tartaric acid monodydrate.

Use of iron complex of meso-tartaric acid as anti-caking additive is described in WO 00/59828. A preparation method of a composition comprising an iron complex of tartaric acid wherein 55 to 90 wt.% of the tartaric acid is meso-tartaric acid is described in WO 2010/139587. The compositions disclosed therein can for example be used for the present invention. A further reference can be made to Bode, A., *The mechanism of anticaking agents for sodium chloride,* PhD thesis Radboud University Nijmegen, 2013. This document mentions that the anticaking agent ferrocyanide, [Fe(CN)₆]⁴⁻ has a very strong anticaking effect, but also inhibits sodium crystal growth and modifies the sodium chloride crystal habit. In particular, sodium crystals grow dendritically in the presence of even extremely small amounts of ferrocyanide. Moreover, the active species of Fe-mTa was identified in that document as a binuclear iron (III) complex with two bridging *meso*-tartrate ligands, wherein a water molecule is desorbed from the Fe-mTa complex.

More broadly, the present application discloses use of a scaling inhibitor for inhibiting and/or mitigating halite deposition in subterranean systems, e.g. hydrocarbon wells, in particular for halite deposition in the near-wellbore region of gas wells, wherein the inhibitor is for instance a composition comprising a metal complex, e.g. with a dihydroxypolycarboxylic compound as ligand. The metal is preferably selected from the group consisting of titanium, chromium and iron (iron (II) and/or iron (III)). The complex is preferably nitrogen-free and the composition for example has a pH of 3 to 9. More broadly, the metal complex preferably has as a ligand compound an aldonic, uranic, or aldaric acid. A preferred ligand is a diprotic carboxylic acid and more preferably an aldaric carboxylic acid e.g. with formula HOOC-(CHOH)ₙ-COOH wherein n is a positive integer e.g. in the range 2-6, optionally n = 3 or 4. Optionally, the ligand is capable of forming an adsorbed binuclear di-metal di-ligand complex on a halite crystal surface. Generally, preferably a metal complex of meso-tartaric acid is used, wherein the metal is one or more selected from the group consisting of iron, titanium and chromium. Preferably mTa is the only ligand besides water. The use of the composition preferably comprises a step of introducing the scaling inhibitor into the underground system, gas well.

An aspect of the invention is the use of a composition for mitigating halite deposition in gas wells, wherein the composition comprises ferri-meso-tartrate (Fe-mTa). Fe-mTa is preferably the iron(III) complex described hereinabove.

Mitigating preferably includes one or more selected from inhibiting, preventing and/or reducing halite deposition, and/or mitigating the effects thereof, and/or causing the removal of the halite to be easier. The use us for example for inhibiting (e.g. preventing, limiting and/or eliminating) production loss and/or clogging of pores in gas wells (at least partly) caused by halite deposition. Preferably, the use is for mitigating pore clogging by NaCl crystallization and precipitation in porous rock in the near-wellbore region of gas wells.

The rock is for example sandstone. In some illustrative embodiments, the rock (such as sandstone) for example has an open porosity of at least 10 vol% or at least 20 vol% or at least 30%, and for instance less than 50 vol% and/or for example has a unimodal pore size distribution of the pores with at least 50% or at least 90% of the pores (e.g. by weight normalized intrusion volume) of at least 20 µm, such as in the range of 20 µm to 30 µm, for example as measured by Mercury Intrusion Porosimetry, for instance the percentage based on weight normalized intrusion volume.

The gas well may comprise a downstream processing unit, for instance dehydration, especially glycol dehydration. For dehydration, e.g. glycol dehydration, typically thermal dehydration is used for regeneration as referenced hereinabove, usually with a glycol reboiler and stripper wherein said stripper and/or reboiler is operated at a temperature of for instance of at least 150 °C, such as at about 200 ° C, or of at least 200 °C. This exemplifies a downstream processing step with a temperature of at least 150 °C or at least 200 °C. Any compounds used for scale prevention or halite mitigation are desirably not be liable to decomposition or reaction into harmful or toxic compounds at such high temperatures or any other downstream processing step. The compounds of the present invention address this desire at least in part. Fe-mTa has the advantage that the presence of traces of Fe-mTa in the glycol which is regenerated, poses no or less environmental and/or health concerns, especially in connection with the thermal dehydration of glycol with a glycol reboiler and stripper, wherein said stripper and/or reboiler is operated at a temperature of for instance of at least 150 °C, such as at about 200 ° C, or of at least 200 °C.

Preferably, the composition comprising Fe-mTa is an aqueous solution and is optionally used at (and has) a pH of 7 or lower, such as in the range of from 2 to 6, optionally at a pH of from 3 to 5, such as about 4.5. For example a gas well may be flushed by introducing an aqueous flushing stream comprising Fe-mTa and having such pH into the well. An acidic pH in these ranges may be beneficial for the effectiveness of Fe-mTa, e.g. by avoiding formation of iron hydroxide such may occur in alkaline rock.

In a preferred embodiment, Fe-mTa is used in view of at least its effect of causing the crystallization of NaCl to yield dendritic crystals, in particular in porous rocks. This can be contrasted with the normal cubic crystals of halite. The dendritic crystals may tend to grow out of the pores. The halite deposits in the presence of Fe-mTa (e.g. dendritic crystalline halite) may also be relatively soft or weak and easily removed e.g. by flushing with water, compared to halite deposits in the absence of Fe-mTa.

Fe-mTa is preferably used for inhibiting pore clogging due to NaCl crystallization in gas wells, especially against pore clogging in porous rock in or associated with gas wells, such as the near-wellbore region. Any porous rock having fluid connection with a production well or injection well may for example be treated. The use provides for reduced pore clogging and/or mitigating the effects thereof, and/or for more effective removal of clogs by flushing with water. The use of Fe-mTa may provide for less down time (less frequent intervention) and shorter downtime. The less or different halite deposition (in particular dendritic crystals) may also allow for higher permeability of the near wellbore region.

The invention also pertains to a method comprising introducing a composition comprising ferri-meso-tartrate (Fe-mTa) into the hydrocarbon well (such as an oil well or gas well). The method is preferably for maintaining and/or operating a hydrocarbon well, more preferably a gas well. Preferably the composition is provided into the near-wellbore region of the gas well, and more preferably into porous rock. Optionally, the well is at risk of or has clogging by halite deposition, or has had such clogging at least once.

The composition as introduced into the well system (e.g. at the datum, such as at an injection well or production well) generally comprises water and typically is an aqueous stream which comprises Fe-mTa and optionally a surfactant.

The composition is for example introduced regularly, such as at intervals, or continuously. Continuously introducing the composition can be carried out using for instance string (small-diameter tubing), for instance through the production tubing. Use of continuously introduced Fe-mTa may provide for more efficient halite deposition prevention, improved permeability and production rates, and/or a decrease of the size of the continuously introduced stream. The composition may also be used as additive for conventional well flushing and well intervention methods.

The composition is for instance introduced into a well (e.g. wellbore) daily or more or less frequently, such as on average each every 10 to 1000 hours, or each every 24 to 120 hours. A time period for shutting in the composition comprising Fe-mTa is for example in the range of about 0.5 to about 24 hours. This method may involve providing Fe-mTa and shutting-in the well for a period of time sufficient to at least initiate adsorption of the Fe-mTa onto the pore walls (including NaCl crystals and/or rock matrix) of porous rock, such as in the near-wellbore region, and/or adsorption onto the wellbore (such as to tubing and equipment).

The composition can be introduced by flushing with fresh water, e.g. as additive of a flushing liquid. The composition is for instance provided to at least 50 m or at least 100 m or at least 500 m below the datum (e.g. below the wellhead). The method for example comprises pumping the composition, or a stream comprising the composition, from the surface into the well. Optionally, an aqueous salt solution is contacted with Fe-mTa and then reinjected into the reservoir of the gas well.

The method may be combined with other well treatment methods, e.g. for mitigating other kinds of scale, and these methods are optionally carried out at least partially simultaneously, such as by flushing with a liquid comprising Fe-mTa and other additives, and/or prior and/or subsequent flushing with other compounds. The method may provide for mitigating halite deposition in gas wells and/or for other effects as described herein for the disclosed use. The disclosed uses are for example carried out by the described methods.

An aspect also pertains to such composition as introduced into the underground system and to a masterbatch composition from which the composition can be prepared by diluting. Hence, a masterbatch composition preferably comprises Fe-mTa in an amount of 0.10 wt.% or at least 1.0 wt.% or at least 5 wt.% or at least 10 wt.% or at least 20 wt.% or at least 30 wt.%, and preferably a surfactant (e.g. anionic, cationic, zwitterionic, and/or non-ionic surfactant), such as in an amount of at least 0.1 wt.% or at least 1.0 wt.% or at least 5.0 wt.%, wherein the master batch preferably comprises water as liquid medium, and for example has a pH lower than 6, lower than 5, or lower than 4. All amounts for the masterbatch are based on total master batch composition.

The method may be applied more broadly than in gas wells and/or oil wells. More generally, an aspect of the invention pertains to a method comprising introducing a composition comprising ferri-meso-tartrate (Fe-mTa) into a subterranean (underground) system which system is liable to halite deposition, wherein the subterranean system preferably comprises at least one borehole, wellbore, one or more pumps, and/or porous rock, and wherein preferably the subterranean system is configured for flow of fluids into and/ or from the system. The system is preferably capable of flow of fluids between a depth and the datum (surface), wherein the fluid is provided into or from a tube at the surface. The system is preferably liable for, or has, or has had, clogging by halite deposition. For instance, the use is for mitigating halite deposition in a subterranean gas injection well, e.g. a CO₂ storage site. The method allows for mitigating halite deposition in such system, in particular for mitigating halite deposition in porous rock. Oil and gas wells are examples of such system. In an embodiment, the method is used for subterranean systems used as CO₂ storage site. Halite deposition may also be a problem for CO₂ storage in reservoirs, for instance for methods comprising CO₂ injection in for example porous rocks such saline aquifers and depleted hydrocarbon wells. This may in particular apply for injection of dry and/or super critical CO₂. Hence, the Fe-mTA can also be used for mitigating CO₂ injection impairment due to halite precipitation. These methods generally comprise injecting and/or pumping a composition comprising Fe-mTa into the subterranean system, e.g. injecting the composition into a subterranean CO₂ storage site through a bore hole from the earth surface.

The invention also pertains to a method of making a Fe-mTa solution comprising dissolving meso-tartaric acid monohydrate and FeCl₃ • 6H₂O in water, and adjusting the pH to 4-5 e.g. about 4.5 by adding a base, for instance NaOH; followed by stirring (further preferably according to Example 1); and also pertains to the clear solution obtained thereby, and to use thereof as described.

The invention will now be further illustrated by the following non-limiting example(s).

### Example 1

A solution of meso-tartaric acid was prepared as follows. A solution of 0.54 g of FeCl₃ • 6H₂O and 0.34 g meso-tartaric acid monohydrate (C₄H₆O₆ • H₂O) in 100 ml demineralized water was prepared. The pH of the solution was corrected to about 4.5 using a solution of NaOH. The solution was stirred for few hours, until the colour changed from orange and turbid to greenish and clear. A NaCl solution was prepared with 30 g NaCl and 100 ml demineralized water. The pH of the solution was corrected to about 4.5 by the use of HCl solution. 10 ml of the inhibitor solution was then added to 100 ml salt solution. In this way an inhibitor concentration of 0.001 M was obtained. The resulting salt solution concentration was about 0.27 % (g salt/g water). The iron(III) meso-tartaric acid was stored in the dark, as this complex may be unstable in the presence of light.

The Na-Fe-cyanide solution was prepared by adding 0.048g Na₄Fe(CN)₆ to 100 ml demineralized water; followed by adding 30 g NaCl to the solution

Coarse porous sandstone was used having open porosity of about 33 vol% and unimodal pore size distribution the pores with most pores in the range of 20 to 30 µm, measured by Mercury Intrusion Porosimetry.

In preliminary experiment A, a few drops of the solution were dried in an oven. Both in the case of Na-Fe-cyanide and iron(III) meso-tartaric acid (Fe-mTa) clear dendritic crystals were observed for crystallization from bulk solution in a petri dish. In a further preliminary experiment B, it was observed that Na-Fe-cyanide inhibits nucleation, but Fe-mTa does not (no increase in degree of saturation at moment of crystallization compared to NaCl solution without inhibitor).

### Figures

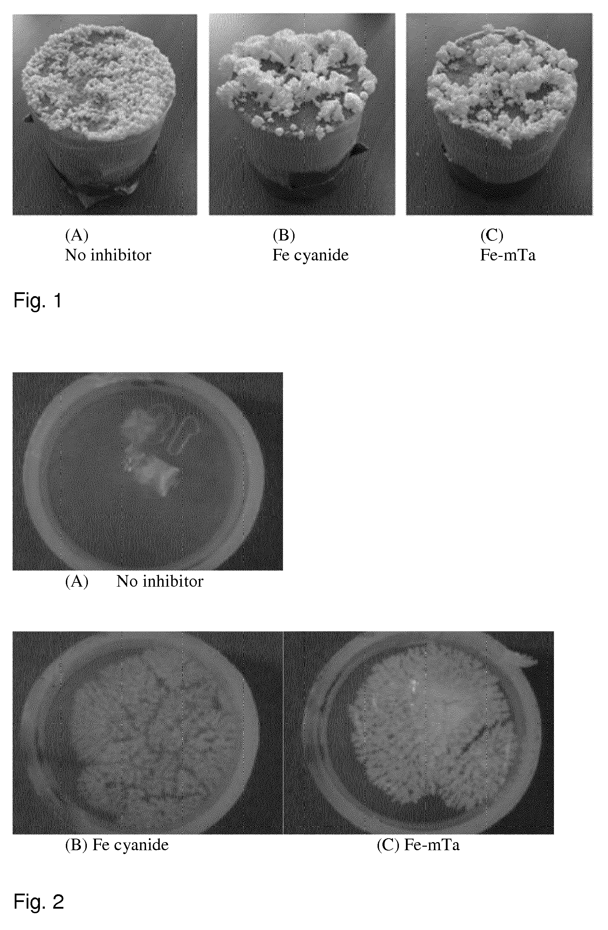

**Figure 1** shows photographs of NaCl crystallizing on the surface of coarse porous sandstone of Example 1 for (A) NaCl solution; (B) NaCl + Na-Fe cyanide (Tetrasodium [hexacyanoferrate(II)]); and (C) NaCl + Fe-mTa. With inventive Fe-mTa (C), the crystals are fluffy and not adherent to the surface, like for reference Na-Fe-cyanide (B), differently from what was observed for the comparative solution without modifier (A). This indicates that Fe-mTa may be an effective inhibitor for mitigating halite deposition and inhibiting the clogging in porous rocks such as sandstone. This is even more surprising because Fe-mTa did not act as nucleation inhibitor.
**Figure 2** shows results of the preliminary experiment A of NaCl crystallization from solution for (A) NaCl solution; (B) NaCl + Na-Fe cyanide; and (C) NaCl + Fe-mTa. For Na-Fe cyanide (B) and Fe-mTa (C), dendritic halite crystals were obtained. For the sample without inhibitor (A) the NaCl crystals were not dendritic. The dendritic crystals cover a larger area and are less compact compared to (A).

## Claims

1. Use of a composition for mitigating halite deposition in a gas well, wherein the composition comprises ferri-meso-tartrate (Fe-mTa).

2. Use of a composition comprising Fe-mTa according to claim 1, for mitigating pore clogging by NaCl crystallization and precipitation in porous rock in the near-wellbore region of gas wells.

3. Use of a composition comprising Fe-mTa according to claim 1 or 2, wherein the gas well comprises dehydration as downstream processing.

4. Use of a composition comprising Fe-mTa according to according to any of claims 1-3, at a pH in the range of from 3 to 5.

5. Use of a composition comprising Fe-mTa according to any of claims 1-4 for causing crystallization of NaCl to result in dendritic crystals.

6. Use of a composition comprising Fe-mTa according to according to any of claims 2-5, wherein said porous rock is sandstone.

7. A method of maintaining a hydrocarbon well comprising introducing a composition comprising ferri-meso-tartrate (Fe-mTa) into the hydrocarbon well.

8. A method according to claim 7, wherein said composition further comprises a surfactant and water.

9. A method according to claim 7 or 8, wherein said well is a gas well and said composition is introduced into the near-wellbore region of the gas well.

10. A method according to any of claims 7-9, wherein Fe-mTa is allowed to adsorb onto the pore walls of porous rock, preferably used in a use according to any of claims 1-6.

11. Use of a composition for mitigating halite deposition in a subterranean gas injection well, wherein the composition comprises ferri-meso-tartrate (Fe-mTa).

12. Use according to claim 11, wherein said subterranean gas injection well is a CO₂ storage site.
